# DEMANDE DE BREVET EUROPEEN

(11) **EP 0 959 256 A1**
(43) Date de publication de la demande: **24.11.1999**
(21) Numéro de dépôt: 99410070.9
(22) Date de dépôt: 20.05.1999
(51) Int. Cl.: F16C 11/06

(54) **Elément de fixation articulé à rotule sertie**

(30) Priorité: 20.05.1998 FR 9806556
(71) Demandeur: SB Ingenierie, 74600 Seynod (FR)
(72) Inventeur: Berthod, Georges, Ferrières, 74370 Pringy (FR)
(74) Mandataire: Hecké, Gérard

(57) **Abrégé**

Procédé de fabrication d'un élément de fixation articulé ayant un axe 12 d'assemblage à rotule, laquelle est logée dans un évidement 16 d'un corps 18 métallique pour former une articulation multidirectionnelle. On introduit la rotule 14 sphérique dans une douille 22 cylindrique délimitant ledit évidement 16 borgne, lequel présente un diamètre dl légèrement supérieur à celui de la rotule. La douille 22 est ensuite déformée par compression axiale à froid suite à une opération de sertissage, avec formation à l'intérieur de la douille 22 d'une cuvette 38 semi-sphérique de retenue de la rotule 14. La rotule 14 est réalisée en acier ayant une ténacité et une dureté supérieures à celles du corps 18. Un organe amortisseur 36 est intercalé entre le fond de l'évidement 16 et la rotule 14 avant l'opération de sertissage.

## Description

### Domaine technique de l'invention

L'invention est relative à un procédé de fabrication d'un élément de fixation articulé ayant un axe d'assemblage à rotule sphérique, laquelle est logée dans un évidement d'un corps métallique pour former une articulation multidirectionnelle suite à une opération de sertissage, après avoir :
- introduit la rotule sphérique dans une douille cylindrique délimitant ledit évidement borgne ayant un diamètre d1 légèrement supérieur à celui de ladite rotule,
déformé la douille par compression à froid selon la direction axiale de l'axe, avec formation à l'intérieur de la douille d'une cuvette semi-sphérique de retenue de la rotule.

### Etat de la technique antérieure

Un procédé connu d'un élément de fixation articulé fait usage d'un corps ayant un évidement semi-sphérique pour le réception de la rotule. Un tel évidement est obtenu par usinage du corps métallique avant l'incorporation de la rotule. Pour retenir la rotule à l'intérieur de l'évidement, il est indispensable de souder une bague d'arrêt sur la face frontale du corps. La surface interne de la bague présente une portée semi-sphérique complémentaire à celle de l'évidement. Le soudage de la bague est effectué par un rayonnement laser de manière à éviter toute protubérance sur la surface latérale externe du corps. La fabrication d'un tel élément de fixation articulé est compliquée et coûteuse, car elle nécessite des tolérances serrées sur l'articulation de la rotule.

Le document EP-A-201212 décrit un dispositif de montage d'une plaque de verre au moyen d'une articulation à rotule sphérique liée à un axe de fixation. La rotule est logée dans un siège de portée sphérique obtenue par une opération de sertissage radial, qui nécessite obligatoirement des reprises d'usinage pour la mise en forme du diamètre extérieur et du filetage associé. Un dispositif analogue est décrit dans le document GB-A-490992.

Les documents US-A-4747203 et US-A-3288501 se rapportent à un procédé de fabrication d'une rotule, dans lequel on effectue un sertissage en déformant axialement la douille cylindrique par compression. L'effet de sertissage reste néanmoins modéré pour la tenue de panneaux de verre.

### Objet de l'invention

Un premier objet de l'invention consiste à élaborer un nouveau procédé de fabrication par sertissage d'un élément de fixation articulé, ne nécessitant pas des opérations d'usinage additionnelles, de manière à réduire le coût de fabrication.

Le procédé selon l'invention est caractérisé en ce que :
- on incorpore un organe amortisseur entre le fond de l'évidement et la rotule avant l'opération de sertissage, de manière à absorber les contraintes s'exerçant sur le corps,
- l'entrée de la douille étant conformée en biseau ayant une première distance axiale L1, laquelle est séparée de la partie rétrécie de la cuvette par une deuxième distance axiale L2, le sertissage optimum étant obtenu lorsque La deuxième distance L2 est environ le double de la première distance L1.

La rotule est réalisée en acier ayant une ténacité et une dureté supérieures à celles du corps. Le sertissage axial à froid est réalisé avec un corps équipé de son filetage externe, sans nécessiter de reprise d'usinage. La présence de l'amortisseur supprime la nécessité d'une cage sphérique dans le fond de la douille.

Un deuxième objet de l'invention consiste à réaliser un élément de fixation articulé ayant une très bonne tenue mécanique.

Le sommet de la rotule est pourvu à cet effet d'un trou borgne pour la réception de l'organe amortisseur. Le fond de l'évidement du corps comporte avantageusement un logement complémentaire pour le calage de l'organe amortisseur.

Selon une caractéristique de l'invention, l'organe amortisseur est formé par un dispositif élastique destiné à absorber les contraintes exercées sur le corps, ainsi que sur le panneau en verre porté par le corps. Le dispositif élastique peut être formé par un ressort de compression, ou un tampon en matériau déformable.

D'autres avantages et caractéristiques ressortiront plus clairement de la description qui va suivre d'un mode de réalisation de l'invention, donné à titre d'exemple non limitatif, et représenté aux dessins annexés, dans lesquels :
- la figure 1 est une vue en coupe éclatée de l'élément de fixation selon l'invention, les pièces étant montrées avant l'opération de sertissage;
- la figure 2 est une vue en coupe de l'élément de fixation après le sertissage de la rotule;
- la figure 3 montre l'utilisation de l'élément de fixation pour le montage d'un vitrage;
- la figure 4 représente une vue éclatée des pièces de la figure 3.

### Description d'un mode de réalisation préférentiel

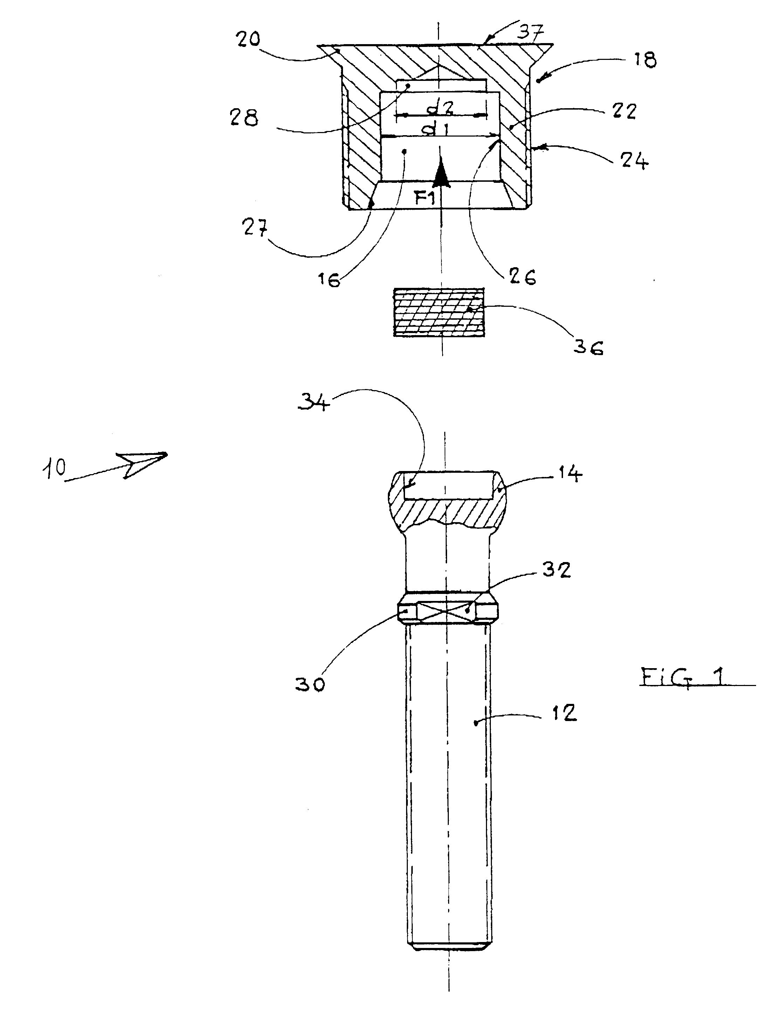

En référence à la figure 1, un élément de fixation 10 articulé comporte un axe 12 fileté ayant une tête conformée en rotule 14, laquelle est destinée à être logée à l'intérieur d'un évidement 16 ménagé dans un corps 18 métallique.

Le corps 18 fixe est doté d'un épaulement 20 tronconique, lequel est prolongé par une douille 22 cylindrique équipée d'un filetage 24 sur sa surface externe. L'évidement 16 est délimité par la surface latérale interne 26 de la douille 22, laquelle est lisse, et présente un diamètre d1 légèrement supérieur à celui de la rotule 14 sphérique. L'entrée 27 de l'évidement 16 est en forme de biseau pour faciliter l'insertion axiale de la rotule 14. Le fond de l'évidement 16 est pourvu d'un logement 28 borgne ayant un diamètre d2 inférieur à celui d1 de la douille 22. La profondeur du logement 28 est inférieure à la longueur axiale de la douille 22.

L'axe 12 fileté du dispositif de fixation 10 comprend un fût allongé, assujetti rigidement à la rotule 14 par une bague 30 intermédiaire, laquelle possède deux méplats 32 diamétralement opposés. Un trou 34 borgne est ménagé au sommet de la rotule 14, et présente une forme complémentaire à celle du logement 28 du corps 18.

Un organe amortisseur 36 est inséré dans le trou 34 avant l'engagement axial de la rotule 14 dans l'évidement 16. L'organe amortisseur 36 est formé par un dispositif élastique, notamment un ressort de compression ou un tampon en matériau déformable, destiné à absorber les contraintes s'exerçant sur le corps 18, ainsi que sur le panneau de verre porté par le corps. La présence de l'organe amortisseur perrmet d'utiliser un corps avec une douille totalement cylindrique.

Les opérations de montage et de maintien de l'axe 12 dans le corps 18 s'effectuent de la manière suivante :

L'ensemble rotule 14 et organe amortisseur 36 est introduit dans l'évidement 16 selon un mouvement de translation axiale, indiqué par la flèche F1 (figure 1). Le tampon de l'organe amortisseur 36 s'engage dans le logement 28 du fond de l'évidement 16, et la rotule 14 sphérique est séparée de la surface latérale 26 cylindrique de la douille 22 par un faible jeu radial. A titre d'exemple, le matériau du corps 18 est en acier inoxydable du type AlSl 316L, alors que la rotule 14 est en acier inoxydable F15NM ayant une ténacité et une dureté supérieures à celles du corps 18.

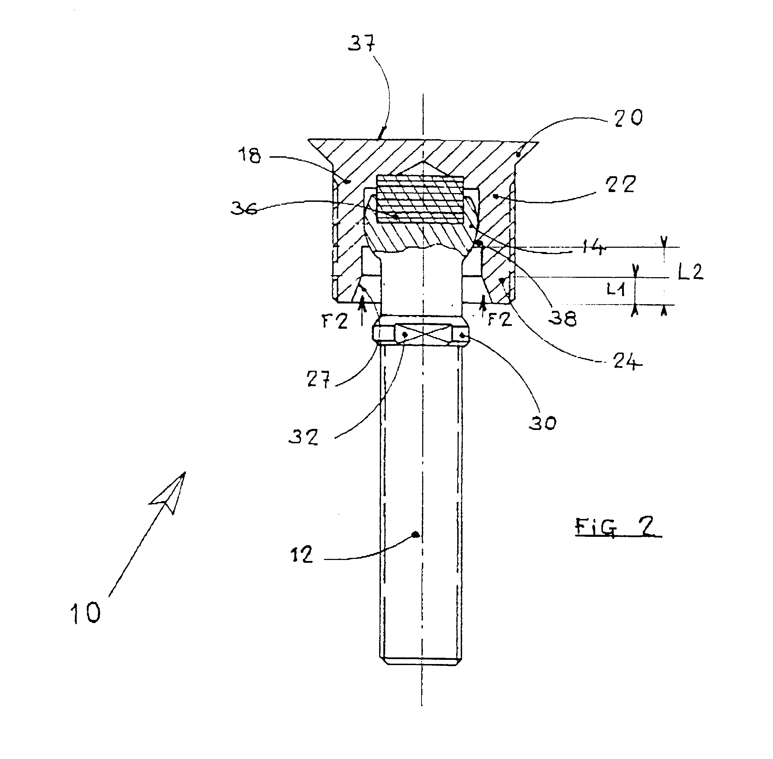

Pour emprisonner la rotule 14 dans le volume de réception de l'évidement 16, on effectue ensuite une opération de sertissage à froid au moyen d'une presse, la base 37 de l'épaulement 20 étant positionnée à plat sur une table de travail. L'outil de la presse prend appui sur la surface frontale annulaire de la douille 22 en exerçant des forces de compression axiales selon la direction de la flèche F2 (figure 2). L'effet de compression provoque la déformation permanente de la douille 22 du côté de la surface interne 26, et la rotule 14 est finalement retenue dans une cuvette 38 semi-sphérique de forme conjuguée. En fin d'opération de sertissage, l'articulation à rotule 14 peut pivoter de façon multidirectionnelle à l'intérieur de la cuvette 38 sertie, tout en y restant emprisonnée. La surface latérale extérieure du corps 18 n'a pas bougé durant le sertissage, et ne nécessite aucune reprise d'usinage.

La présence de l'organe amortisseur 36 à l'intérieur de l'évidement 16 permet l'absorption des contraintes mécaniques susceptibles de s'exercer sur le corps 18 lors du montage d'un panneau au niveau de l'épaulement 20. En l'absence de contraintes, l'axe 12 saillant est sollicité selon une direction axiale en s'étendant perpendiculairement à la base 37 de l'épaulement 20 après rattrapage du jeu axial.

Cette opération de sertissage ne nécessite aucune opération de reprise d'usinage. L'entrée de la douille est conformée en biseau ayant une première distance axiale L1, laquelle est séparée de la partie rétrécie de la cuvette par une deuxième distance axiale L2, le sertissage optimum étant obtenu lorsque la deuxième distance L2 est environ le double de la première distance L1.

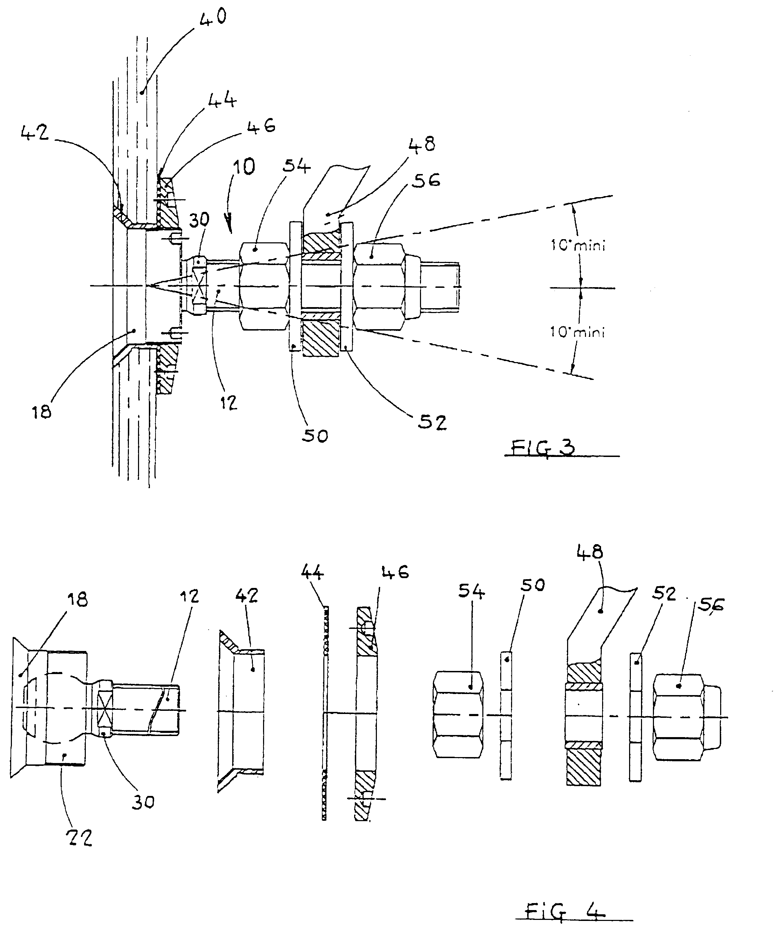

Les figures 3 et 4 montrent l'application d'un élément de fixation 10 pour le montage d'un vitrage 40 ou de tout autre panneau de parement pour le bâtiment. Une bague 42 en aluminium est rapportée sur une partie de la surface latérale extérieure du corps 18 pour servir de support au vitrage 40, lequel a une épaisseur prédéterminée V. Une rondelle 44 est ensuite interposée entre la face interne du vitrage 40, et un écrou 46 de blocage est vissé sur l'extrémité du filetage 24 pour solidariser le vitrage 40 sur le corps 18.

L'axe 12 articulé est fixé mécaniquement à un bras support 48 en liaison avec un point d'ancrage ( non représenté ) de la structure du bâtiment. Le bras support 48 est immobilisé axialement sur l'axe 12 entre deux rondelles 50, 52 associées à des écrous d'arrêt 54, 56. L'assemblage de l'axe 12 avec le corps 18 de support du vitrage 40 s'opère au moyen de l'articulation à rotule 14 permettant des inclinaisons multidirectionnelles de l'axe 12 par rapport à la direction axiale.

## Revendications

1. Procédé de fabrication d'un élément de fixation articulé ayant un axe (12) d'assemblage à rotule (14) sphérique, laquelle est logée dans un évidement (16) d'un corps (18) métallique pour former une articulation multidirectionnelle suite à une opération de sertissage, après avoir :
- introduit la rotule (14) sphérique dans une douille (22) cylindrique délimitant ledit évidement (16) borgne ayant un diamètre d1 légèrement supérieur à celui de ladite rotule (14),
- déformé la douille (22) par compression à froid selon la direction axiale de l'axe (12), avec formation à l'intérieur de la douille (22) d'une cuvette (38) semi-sphérique de retenue de la rotule (14),
caractérisé en ce que :
- on incorpore un organe amortisseur (36) entre le fond de l'évidement (16) et la rotule (14) avant l'opération de sertissage, de manière à absorber les contraintes s'exerçant sur le corps,
- l'entrée (27) de la douille (22) étant conformée en biseau ayant une première distance axiale L1, laquelle est séparée de la partie rétrécie de la cuvette (38) par une deuxième distance axiale L2, le sertissage optimum étant obtenu lorsque la deuxième distance L2 est environ le double de la première distance L1.

2. Procédé de fabrication d'un élément de fixation articulé selon la revendication 1, caractérisé en ce que la rotule (14) est réalisée en acier ayant une ténacité et une dureté supérieures à celles du corps (18).

3. Procédé de fabrication d'un élément de fixation articulé selon la revendication 2, caractérisé en ce que la rotule (14) est en acier inoxydable à base de nickel-chrome et/ou molybdène.

4. Elément de fixation articulé, notamment pour l'assemblage de panneaux de verre, obtenu par le procédé de fabrication selon l'une des revendications 1 à 3.

5. Elément de fixation articulé selon la revendication 4, caractérisé en ce que le sommet de la rotule (14) est pourvu d'un trou (34) borgne pour la réception de l'organe amortisseur (36).

6. Elément de fixation articulé selon la revendication 5, caractérisé en ce que le fond de l'évidement (16) du corps (18) comporte un logement (28) de calage de l'organe amortisseur (36).

7. Elément de fixation articulé selon la revendication 5 ou 6, caractérisé en ce que l'organe amortisseur (36) est formé par un dispositif élastique comprenant notamment un ressort de compression ou un tampon en matériau déformable.
